# DEMANDE DE BREVET EUROPEEN

(11) **EP 0 890 307 A1**
(43) Date de publication de la demande: **13.01.1999**
(21) Numéro de dépôt: 98420105.3
(22) Date de dépôt: 25.06.1998
(51) Int. Cl.: A01K 89/01

(54) **Moulinet de pêche à frein arrière et à réserve de fil interchangeable**

(30) Priorité: 07.07.1997 FR 9708828
(71) Demandeur: Mitchell Sports, 74970 Marignier (FR)
(72) Inventeur: Bernard, Jean, 74950 Scionzier (FR); Platel, Frédéric, 74970 Marignier (FR)
(74) Mandataire: Poncet, Jean-François

(57) **Abrégé**

Le moulinet selon l'invention comprend un arbre support de bobine (5) tenu dans un boîtier de moulinet (1) et portant un moyeu antérieur (7) ayant un fût cylindrique (9) coaxial antérieur raccordé par un épaulement (10) à une jupe postérieure (11) coaxiale. Une réserve de fil (12) s'engage et se bloque par un trou axial (16) sur le fût cylindrique coaxial antérieur (9) du moyeu antérieur (7). La réserve de fil (12) comporte une paroi antérieure (17) pleine obturant le trou axial (16) vers l'avant.

L'invention s'applique aux moulinets à frein arrière et réserve de fil interchangeable.

## Description

La présente invention concerne les moulinets de pêche du type à bobine fixe sur un axe antéro-postérieur et à récupérateur de fil rotatif autour de l'axe antéro-postérieur, l'axe de la bobine étant entraîné en mouvement de translation alternative antéro-postérieure pendant la récupération du fil. L'invention concerne plus spécialement les moulinets dans lesquels la bobine est constituée d'une réserve interchangeable de fil adaptée sur un moyeu antérieur porté par l'axe antéro-postérieur.

On connaît déjà des moulinets de ce type, décrits par exemple dans les documents FR 1 376 793 A, FR 1 169 240 A ou GB 1 268 255 A, dans lesquels un arbre support de bobine est tenu par sa partie postérieure dans un boîtier de moulinet, et un moyeu antérieur est porté par l'arbre support de bobine et comporte un fût cylindrique coaxial antérieur raccordé à un épaulement postérieur de plus grand diamètre. Une réserve de fil, en forme de bobine, est constituée d'une pièce monobloc dont la périphérie est conformée en gorge de réception de fil limitée par un flasque antérieur et par un flasque postérieur. La partie centrale de réserve de fil est conformée avec un trou axial traversant pour s'engager et se bloquer de façon réversible sur le fût cylindrique coaxial antérieur du moyeu antérieur. Le moyeu peut tourner autour de l'arbre, en étant freiné par un frein de bobine commandé par un bouton de réglage accessible depuis l'avant à travers l'orifice antérieur du trou axial de la réserve de fil.

Dans le document FR 1 376 793 A, la bobine est de type enveloppée, c'est à dire que son flasque postérieur est engagé dans une partie cylindrique d'un tambour de récupérateur de fil. L'enlèvement de la bobine nécessite la manoeuvre d'une agrafe élastique. Dans le document GB 1 268 255 A, la bobine est également du type enveloppée et son enlèvement nécessite l'enlèvement du bouton de manoeuvre de frein avant. Dans le document FR 1 169 240 A, la réserve de fil est adaptable sur le moyeu par un système de baïonnette.

Le document FR 1 212 063 décrit une autre structure de moulinet à bobine enveloppante monobloc vissée sur un moyeu freiné par un frein avant. L'enlèvement de la bobine nécessite de bloquer le frein.

Dans tous les cas, la présence du bouton de réglage de frein avant entraîne un risque de pénétration de poussière et d'eau, susceptible de perturber le fonctionnement du moulinet.

Les mêmes inconvénients se rencontrent avec les moulinets à frein arrière et bobine interchangeable, dans lesquels un bouton antérieur de déverrouillage de bobine est accessible depuis l'avant.

On constate en outre qu'un jeu existe entre la bobine et l'arbre support de bobine, entraînant des irrégularités de bobinage du fil sur la bobine en cours de récupération de fil.

On connaît par ailleurs, comme décrit dans le document FR 2 571 930 A, une bobine interchangeable de moulinet ayant une face avant constituée d'une membrane souple et étanche autorisant la manoeuvre d'un poussoir de déverrouillage. Une telle structure est onéreuse.

Les dessins du document FR 1 020 118 A montrent un moulinet dont la bobine est montée de façon amovible directement sur l'axe par un encliquetage à bille et comporte une paroi antérieure pleine convexe. Dans le document FR 1 006 860 A, une bobine fixe à paroi antérieure pleine convexe est calée directement sur l'axe. Dans ces structures, il n'y a pas de réserve de fil interchangeable.

Le problème proposé par la présente invention est d'assurer, dans un moulinet à réserve de fil interchangeable adaptée sur un moyeu antérieur, une amélioration de la protection des éléments internes du moulinet contre les pénétrations de poussière et d'eau.

Simultanément, l'invention vise à simplifier la structure de bobine, permettant d'abaisser le coût de l'élément interchangeable constituant la réserve de fil, tout en augmentant sa robustesse.

Un avantage supplémentaire recherché par certains modes de réalisation de l'invention est de réduire les risques d'accrochage du fil sur la partie antérieure de bobine, pendant le fonctionnement du moulinet.

Pour atteindre ces objets ainsi que d'autres, l'invention prévoit un moulinet de pêche à bobine et récupérateur, comprenant :
- un arbre support de bobine tenu par sa partie postérieure dans un boîtier de moulinet,
- un moyeu antérieur porté par l'arbre support de bobine et comportant un fût cylindrique coaxial antérieur raccordé par un épaulement à une jupe postérieure coaxiale de plus grand diamètre,
- au moins une réserve de fil formée d'une pièce monobloc, dont la périphérie est conformée en gorge de réception de fil limitée par un flasque antérieur et par un flasque postérieur, et dont la partie centrale est conformée avec un trou axial pour s'engager et se bloquer de façon réversible sur le fût cylindrique coaxial antérieur du moyeu antérieur ;
- la réserve de fil comporte une paroi antérieure pleine, obturant le trou axial vers l'avant.

La structure de réserve interchangeable de fil, entièrement monobloc, est particulièrement simple et peu onéreuse, constituée d'une quantité de matière réduite, tout en étant robuste.

De préférence, la paroi antérieure pleine de réserve de fil a une forme convexe légèrement proéminente et régulièrement arrondie, constituant une face antérieure lisse et sans aspérités sur laquelle le fil ne peut avoir de prise.

Par cette solution particulièrement peu onéreuse, on évite tout risque d'accrochage du fil sur la face antérieure de la bobine.

Selon un mode de réalisation avantageux, permettant notamment de faciliter le moulage des pièces et d'éviter l'accrochage du fil sur le flasque postérieur de bobine :
- le flasque postérieur de réserve de fil se raccorde à sa périphérie à une lèvre postérieure annulaire,
- l'épaulement du moyeu antérieur comporte une feuillure annulaire périphérique antérieure,
- la lèvre postérieure et la feuillure sont conformées de façon que, en position assemblée de la réserve de fil sur le moyeu antérieur, la lèvre postérieure est engagée dans la feuillure avec sa face postérieure en appui contre la face antérieure de feuillure, avec sa face périphérique légèrement en retrait radial ou en affleurement de la face périphérique de jupe postérieure, et avec un jeu axial entre la face postérieure de flasque postérieur de la réserve de fil et la face antérieure d'épaulement du moyeu antérieur.

D'autres objets, caractéristiques et avantages de la présente invention ressortiront de la description suivante de modes de réalisation particuliers, faite en relation avec les figures jointes, parmi lesquelles:
- la figure 1 est une vue de côté en coupe longitudinale d'un moulinet de pêche selon un mode de réalisation de la présente invention ;
- la figure 2 est une vue partielle de côté en coupe longitudinale à plus grande échelle de la partie antérieure du moulinet de la figure 1 ;
- la figure 3 est une vue de dessus du moyeu antérieur d'arbre support de bobine selon un mode de réalisation de l'invention ;
- la figure 4 est une demie vue en bout du moyeu antérieur de la figure 3 ;
- la figure 5 est une demie vue en bout vue d'arrière de la réserve de fil selon le mode de réalisation de la figure 2 ; et
- la figure 6 est une vue de dessus en coupe longitudinale de la réserve de fil selon le mode de réalisation de la figure 2.

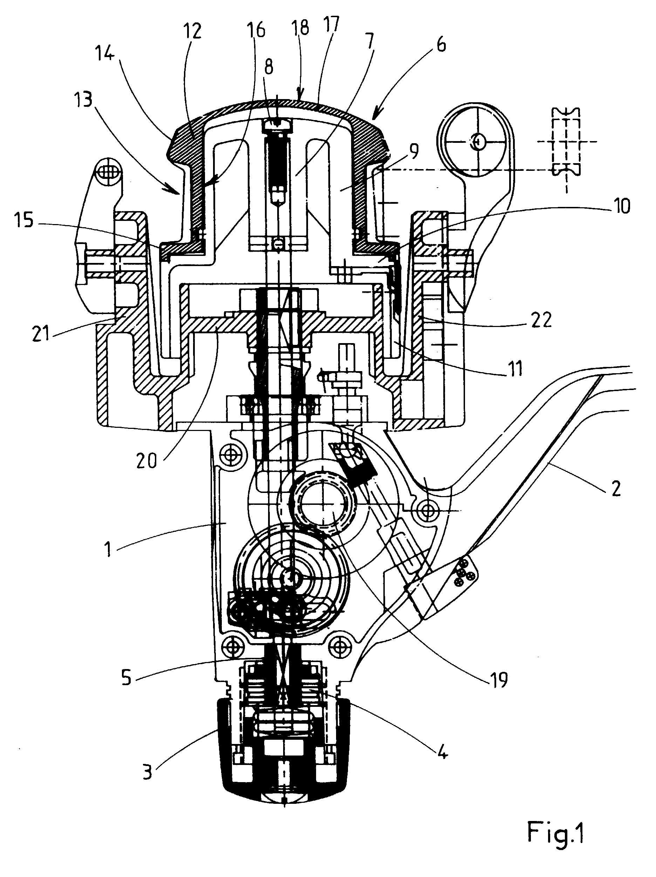

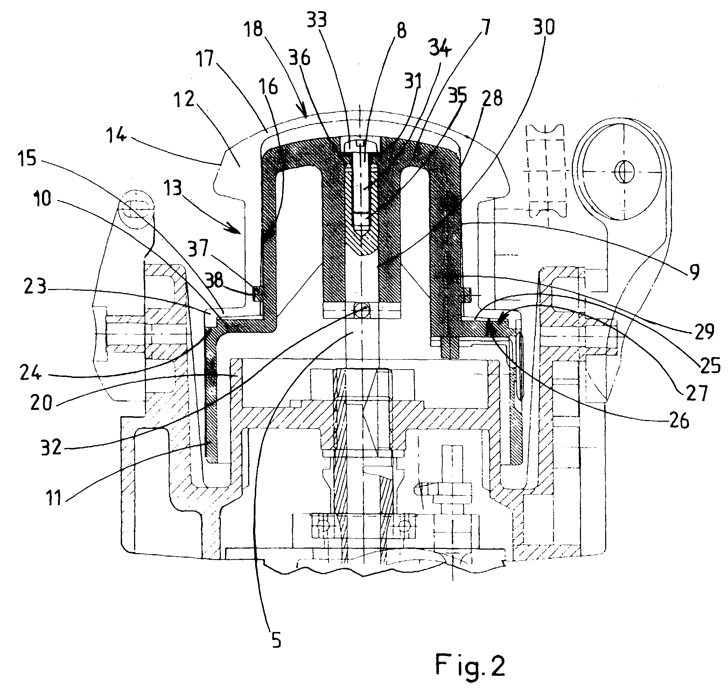

Dans le mode de réalisation représenté sur la figure 1, et à plus grande échelle sur la figure 2, un moulinet selon l'invention comprend un boîtier de moulinet 1, constituant une structure creuse avec un pied 2 de fixation à une canne à pêche. En partie postérieure du boîtier 1, un bouton de manoeuvre 3 permet le réglage d'un frein arrière constitué d'un empilage de rondelles 4, de structure connue, permettant de régler un couple de freinage appliqué à un arbre support de bobine 5 monté rotatif. L'arbre support de bobine 5 est tenu dans le boîtier de moulinet 1 par sa partie postérieure, et dépasse du boîtier 1 par sa partie antérieure qui porte une bobine 6.

Un moyeu antérieur 7 est porté par l'arbre support de bobine 5, auquel il est fixé par une vis d'assemblage 8.

Le moyeu antérieur 7 comporte un fût cylindrique 9 coaxial antérieur, raccordé par un épaulement 10 à une jupe postérieure 11 coaxiale de plus grand diamètre.

La bobine 6 est constituée de l'assemblage du moyeu antérieur 7 et d'une réserve de fil 12 formée d'une pièce monobloc, dont la périphérie est conformée en gorge 13 de réception de fil limitée par un flasque antérieur 14 et un flasque postérieur 15. La partie centrale de réserve de fil 12 est conformée avec un trou axial 16 pour s'engager et se bloquer de façon réversible sur le fût cylindrique 9 coaxial antérieur du moyeu antérieur 7.

De préférence, comme représenté sur les figures, le diamètre du fût cylindrique 9 coaxial antérieur du moyeu antérieur 7 est maximisé, par exemple seulement peu inférieur au diamètre de la gorge 13 de réception de fil de la réserve de fil 12. On diminue ainsi la quantité de matière nécessaire pour constituer la réserve de fil 12 interchangeable, on réduit les risques de jeu entre le moyeu antérieur 7 et la réserve de fil 12, et on réduit l'effort nécessaire pour le montage et le démontage de la réserve de fil 12.

La réserve de fil 12 comporte une paroi antérieure 17 pleine, obturant le trou axial 16 vers l'avant.

Dans le mode de réalisation illustré sur les figures 1 et 2, la paroi antérieure pleine 17 de réserve de fil a une forme convexe légèrement proéminente et régulièrement arrondie, constituant une face antérieure 18 lisse et sans aspérités, sur laquelle le fil ne peut avoir de prise.

De façon connue, le moulinet est actionné au moyen d'une manivelle, non représentée sur la figure 1, tourillonnant sur un arbre transversal 19 qui, par un mécanisme connu en soi, entraîne en translation longitudinale alternative l'arbre support de bobine 5. Simultanément, le mécanisme entraîne un tambour de récupérateur 20 en rotation autour de l'arbre support de bobine 5. Le tambour de récupérateur 20 comporte deux bras antérieurs 21 et 22 portant un arceau de récupérateur escamotable qui, lors de la rotation du tambour de récupérateur 20, enroule progressivement le fil dans la gorge 13 de la réserve de fil 12.

Comme on le voit plus en détail sur la figure 2, le flasque postérieur 15 de la réserve de fil 12 se raccorde à sa périphérie à une lèvre postérieure annulaire 23, avantageusement de forme cylindrique coaxiale. L'épaulement 10 du moyeu antérieur 7 comporte une feuillure annulaire périphérique antérieure 24. La lèvre postérieure 23 et la feuillure 24 sont conformées l'une et l'autre de façon que, en position assemblée de la réserve de fil 12 sur le moyeu antérieur 7 comme illustré sur la figure 2, la lèvre postérieure 23 est engagée dans la feuillure 24 avec la face postérieure de lèvre postérieure 23 en appui contre la face antérieure de la feuillure 24.

Un jeu axial 25 est de préférence laissé entre la face postérieure 26 du flasque postérieur 15 de la réserve de fil 12 et la face antérieure 27 de l'épaulement 10 du moyeu 7.

De même, comme on le voit sur la figure 2, la partie antérieure 28 du fût cylindrique 9 est engagée sans jeu dans le fond du trou axial 16 de la réserve de fil 12, tandis que la partie postérieure 29 du fût cylindrique 9 est engagée avec un léger jeu radial dans le trou 16, de sorte que le maintien radial de la réserve de fil 12 est assuré par la partie antérieure 28 du fût cylindrique 9 et par la lèvre postérieure 23 engagée dans la feuillure 24.

De préférence, le diamètre extérieur de la lèvre postérieure 23 est au plus égal au diamètre extérieur de la jupe postérieure 11, de sorte que la face périphérique de lèvre postérieure 23 est légèrement en retrait radial ou en affleurement de la face périphérique de jupe postérieure 11.

Pour l'assemblage du moyeu antérieur 7 sur l'arbre support de bobine 5, au moyen de la vis d'assemblage axiale 8, le moyeu antérieur 7 comporte un trou axial 30 traversant, à portion intermédiaire rétrécie 31, et dans lequel s'engage sans jeu le tronçon antérieur de l'arbre support de bobine 5. L'extrémité antérieure de l'arbre support de bobine 5 vient en appui contre la face postérieure de la partie rétrécie 31. Une clavette 32 assure la solidarisation en rotation entre l'arbre support de bobine 5 et le moyeu 7. La vis d'assemblage axiale 8 comprend une tête 33 qui porte contre la face antérieure de la partie rétrécie 31, et une tige 34 qui est vissée dans un alésage taraudé 35 du tronçon d'extrémité de l'arbre support de bobine 5.

Des rondelles 36 peuvent être interposées entre l'extrémité antérieure de l'arbre support de bobine 5 et la face postérieure de la partie rétrécie 31, pour régler la position axiale du moyeu antérieur 7 et de la réserve de fil 12 sur l'arbre support de bobine 5. On peut ainsi régler facilement la position axiale du moyeu antérieur 7 et de la réserve de fil 12 sur l'arbre support de bobine 5, de façon à régler les limites du déplacement antéro-postérieur en va-et-vient de la réserve de fil 12 par rapport au récupérateur de fil 20. On optimise ainsi le bobinage du fil.

Pour assurer l'assemblage de la réserve de fil 12 sur le moyeu 7, on prévoit au moins un ergot radial 37 dépassant de la surface latérale du fût cylindrique 9, de préférence dans la partie postérieure 29 du fût cylindrique 9, et au moins une rainure 38 ménagée sur la face intérieure périphérique correspondante du trou axial 16 de la réserve de fil 12.

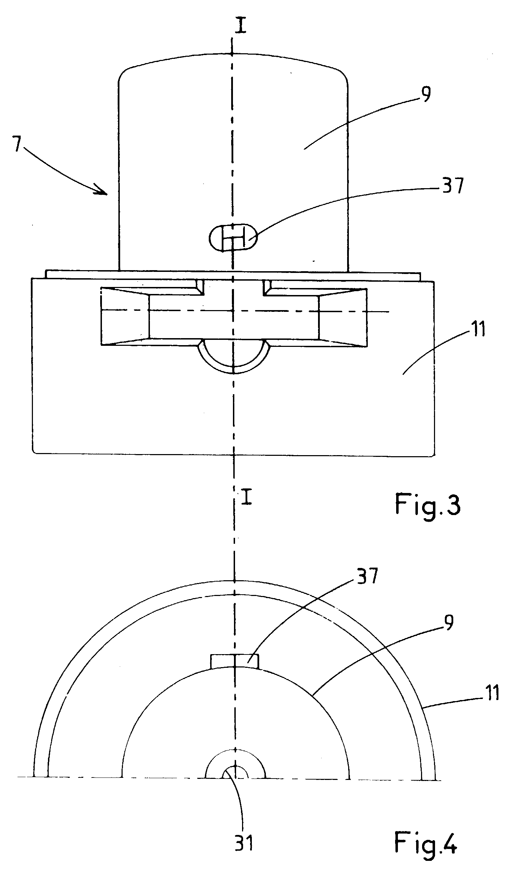

Comme on le voit mieux sur les figures 3 et 4, l'ergot radial 37 peut avoir une section oblongue, légèrement inclinée par rapport à l'axe longitudinal I-I.

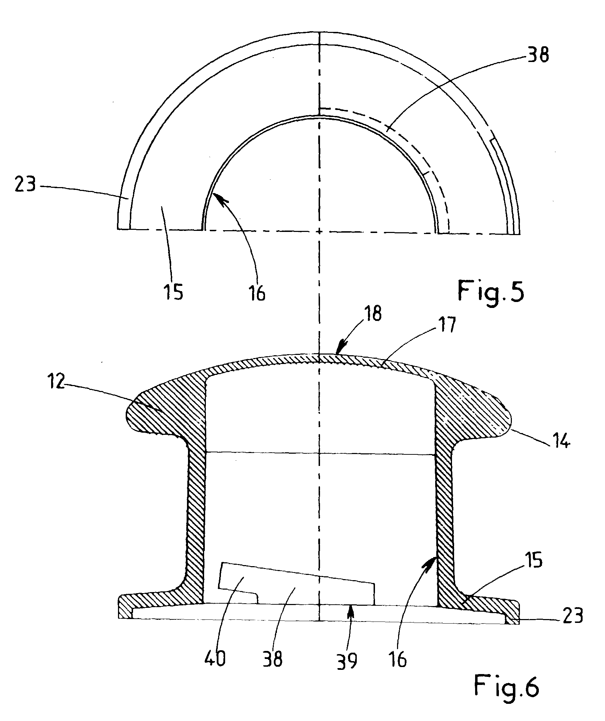

Comme on le voit mieux sur les figures 5 et 6, la rainure 38 débouche à l'extrémité postérieure 39 du trou axial 16 de réserve de fil, et comporte une partie antérieure 40 hélicoïdale dans laquelle s'engage et se coince l'ergot 37 lors d'un mouvement relatif de rotation de la réserve de fil 12 autour du moyeu 7.

Ainsi, l'ergot 37 et la rainure 38 sont disposés de façon que l'ergot 37 puisse s'engager dans le début de la rainure 38 par coulissement axial de la réserve de fil 12 sur le moyeu 7. Ensuite, lors d'une sollicitation de la réserve de fil 12 par rotation autour du moyeu 7, l'ergot 17 porte sur les faces de la partie hélicoïdale 40 de la rainure 38 formant une rampe tendant à forcer la lèvre 23 dans la feuillure 24, tandis que l'ergot 37 frotte contre les parois de la rainure hélicoïdale 40 et se coince dans ladite rainure.

L'invention s'applique à tous types de moulinets de pêche à frein arrière à bobine fixe et récupérateur rotatif. Mais l'invention s'applique plus avantageusement à de tels moulinets dont la bobine est de type enveloppante, c'est-à-dire dont la jupe postérieure 11 de moyeu recouvre le tambour de récupérateur 20 et est donc accessible pour bloquer le moyeu 7 pendant le vissage ou le dévissage de la réserve de fil 12.

On comprend qu'une telle structure de moulinet permet de supprimer tous les jeux entre l'arbre support de bobine 5 et la réserve de fil 12, permet d'éviter tout risque d'accrochage du fil lors des étapes de récupération du fil, et permet de régler facilement les limites du déplacement antéro-postérieur de la réserve de fil 12 par rapport au récupérateur de fil pour optimiser le bobinage du fil. En outre, la structure de bobine est pratiquement étanche, empêchant la pénétration de poussière et d'eau entre la réserve de fil 12 et le moyeu 7, assurant une grande fiabilité du dispositif. Egalement, la structure de réserve de fil 12 est particulièrement peu onéreuse, pouvant être fabriquée par moulage de matière plastique, tout en étant particulièrement robuste grâce à la présence de la paroi antérieure 17 pleine.

La présente invention n'est pas limitée aux modes de réalisation qui ont été explicitement décrits, mais elle en inclut les diverses variantes et généralisations contenues dans le domaine des revendications ci-après.

## Revendications

1. Moulinet de pêche à bobine (6) et récupérateur (20), comprenant :
- un arbre support de bobine (5) tenu par sa partie postérieure dans un boîtier de moulinet (1),
- un moyeu antérieur (7) porté par l'arbre support de bobine (5) et comportant un fût cylindrique (9) coaxial antérieur raccordé par un épaulement (10) à une jupe postérieure (11) coaxiale de plus grand diamètre,
- au moins une réserve de fil (12) formée d'une pièce monobloc, dont la périphérie est conformée en gorge (13) de réception de fil limitée par un flasque antérieur (14) et par un flasque postérieur (15), et dont la partie centrale est conformée avec un trou axial (16) pour s'engager et se bloquer de façon réversible sur le fût cylindrique (9) coaxial antérieur du moyeu antérieur (7),
caractérisé en ce que la réserve de fil (12) comporte une paroi antérieure (17) pleine, obturant le trou axial (16) vers l'avant.

2. Moulinet selon la revendication 1, caractérisé en ce que la paroi antérieure pleine (17) de réserve de fil (12) a une forme convexe légèrement proéminente et régulièrement arrondie, constituant une face antérieure (18) lisse et sans aspérités sur laquelle le fil ne peut avoir de prise.

3. Moulinet selon l'une des revendications 1 ou 2, caractérisé en ce que :
- le flasque postérieur (15) de réserve de fil (12) se raccorde à sa périphérie à une lèvre postérieure annulaire (23),
- l'épaulement (10) du moyeu antérieur (7) comporte une feuillure annulaire périphérique antérieure (24),
- la lèvre postérieure (23) et la feuillure (24) sont conformées de façon que, en position assemblée de la réserve de fil (12) sur le moyeu antérieur (7), la lèvre postérieure (23) est engagée dans la feuillure (24) avec sa face postérieure en appui contre la face antérieure de feuillure (24), avec sa face périphérique légèrement en retrait radial ou en affleurement de la face périphérique de jupe postérieure (11), et avec un jeu axial (25) entre la face postérieure (26) de flasque postérieur (15) de la réserve de fil (12) et la face antérieure (27) d'épaulement (10) du moyeu antérieur (7).

4. Moulinet selon l'une quelconque des revendications 1 à 3, caractérisé en ce qu'il comprend :
- au moins un ergot radial (37) dépassant de la surface latérale du fût cylindrique (9),
- au moins une rainure (38), ménagée sur la face intérieure périphérique du trou axial (16) de réserve de fil (12), débouchant à l'extrémité postérieure (39) du trou axial (16) de réserve de fil (12), et ayant une partie antérieure (40) hélicoïdale dans laquelle s'engage et se coince l'ergot (37) lors d'un mouvement relatif de rotation de la réserve de fil (12) autour du moyeu antérieur (7).

5. Moulinet selon l'une quelconque des revendications 1 à 4, caractérisé en ce que le moyeu antérieur (7) comporte un trou axial (30) traversant, à portion intermédiaire rétrécie (31), et dans lequel s'engage sans jeu le tronçon antérieur de l'arbre support de bobine (5), l'extrémité antérieure de l'arbre support de bobine (5) venant en appui contre la face postérieure de la partie rétrécie (31), avec une vis d'assemblage axiale (8) à tête (33) portant contre la face antérieure de la partie rétrécie (31) et à tige (34) vissée dans un alésage taraudé (35) du tronçon d'extrémité de l'arbre support de bobine (5) pour l'assemblage du moyeu antérieur (7) sur l'arbre support de bobine (5).

6. Moulinet selon la revendication 5, caractérisé en ce que des rondelles (36) sont interposées entre l'extrémité antérieure de l'arbre support de bobine (5) et la face postérieure de la partie rétrécie (31), pour régler la position axiale du moyeu antérieur (7) et de la réserve de fil (12) sur l'arbre support de bobine (5).
